(19) Europäisches Patentamt
European Patent Office
Office européen des brevets

(11) **EP 1 884 093 B1**

(12) **EUROPEAN PATENT SPECIFICATION**

(45) Date of publication and mention
of the grant of the patent:
**07.03.2018  Bulletin 2018/10**

(21) Application number: **05773494.9**

(22) Date of filing: **19.07.2005**

(51) Int Cl.:
*H04L 25/02* *(2006.01)*      *H04W 72/12* *(2009.01)*

(86) International application number:
**PCT/US2005/025802**

(87) International publication number:
**WO 2006/124042 (23.11.2006 Gazette 2006/47)**

(54) **ON-DEMAND REVERSE-LINK PILOT TRANSMISSION**

BEDARFSGESTEUERTE RÜCKWÄRTSSTRECKEN-PILOTÜBERTRAGUNG

TRANSMISSION DE PILOTES À LA DEMANDE SUR UNE LIAISON INVERSE

(84) Designated Contracting States:
**AT BE BG CH CY CZ DE DK EE ES FI FR GB GR HU IE IS IT LI LT LU LV MC NL PL PT RO SE SI SK TR**

(30) Priority: **13.05.2005  US 129636**

(43) Date of publication of application:
**06.02.2008  Bulletin 2008/06**

(60) Divisional application:
**10173508.2 / 2 288 096**

(73) Proprietor: **QUALCOMM INCORPORATED**
**San Diego, CA 92121 (US)**

(72) Inventors:
• **SUTIVONG, Arak**
**c/o Qualcomm Incorporated**
**San Diego, California 92121-1714 (US)**
• **AGRAWAL, Avneesh**
**San Diego, California 92127 (US)**
• **GOROKHOV, Alexei**
**San Diego, California 92130 (US)**
• **TEAGUE, Edward, Harrison**
**San Diego, California 92130 (US)**

(74) Representative: **Heselberger, Johannes**
**Bardehle Pagenberg Partnerschaft mbB**
**Patentanwälte, Rechtsanwälte**
**Prinzregentenplatz 7**
**81675 München (DE)**

(56) References cited:
**US-A1- 2001 055 297      US-A1- 2003 108 117**
**US-A1- 2004 085 939**

**Description**

**BACKGROUND**

**I. Field**

The present disclosure relates generally to communication and more specifically to pilot transmission in a communication system.

**II. Background**

In a communication system, a base station processes traffic data to generate one or more modulated signals and then transmits the modulated signal(s) on a forward link (FL) to one or more terminals. The forward link (or downlink) refers to the communication link from the base station to the terminals, and the reverse link (or uplink) refers to the communication link from the terminals to the base station. The base station may serve many terminals and may select a subset of these terminals for data transmission on the forward link at any given moment.

The base station can typically improve the performance of the FL data transmission by employing advanced scheduling and/or transmission techniques. For example, the base station may schedule terminals in a manner to account for frequency selective fading (or a non-flat frequency response) observed by the terminals. As another example, the base station may perform beamforming to steer the FL data transmission toward the scheduled terminals. In order to employ the advanced scheduling and/or transmission techniques, the base station typically needs to have reasonably accurate estimates of the forward link channel responses between the base station and the terminals.

In a frequency division duxplexed (FDD) system, the forward and reverse links are allocated separate frequency bands. Consequently, the forward link channel response may not correlate well with the reverse link channel response. In this case, the terminals would need to estimate their forward link channel responses and send back the forward link channel estimates to the base station. The amount of signaling needed to send back the forward link channel estimates is typically prohibitive and thus limits or prevents the use of the advanced techniques for the FDD system.

In a time division duxplexed (TDD) system, the forward and reverse links share the same frequency band. The forward link is allocated a portion of the time and the reverse link is allocated the remaining portion of the time. In the TDD system, the forward link channel response may be highly correlated with, and may even be assumed to be reciprocal of, the reverse link channel response. For a reciprocal channel, the base station can estimate the reverse link channel response for a terminal based on a pilot transmitted by that terminal and can then estimate the forward link channel response for the terminal based on the reverse link channel estimate. This can simplify channel estimation for the forward link.

As noted above, the base station may serve many terminals. Requiring pilot transmission from all terminals all of the time may lead to extremely inefficient utilization of the system resources. This inefficiency may manifest itself as higher interference to other base stations and a larger overhead for pilots on the reverse link.

There is therefore a need in the art for techniques to more efficiently transmit pilots in a communication system.

US 2003/108117 A1 discloses methods for advanced processing of data for transmission in multiple-input multiple-output (MIMO) systems. Systems such as the system disclosed by reference D1 use channel estimates for spatial processing of data in order to achieve beamforming in multiple-input single-output (MISO) systems or beamforming and eigensteering in MIMO systems. For this purpose, channels estimates are derived by the transmitter, based on pilots send by the receiver on the reverse channel. The systems requires pilot transmission from the receiver all of the time.

US 2001/055297 A1 describes a method for assigning interference free forward and reverse channels for data transmissions between base stations and mobile stations. For this purpose, mobile stations and base stations can transmit pilot tones respectively on the forward and the reverse channel. On the reverse channel, all active terminals, which are all terminals with pending packets that have already been assigned a channel, transmit pilot tones. These pilot tones are transmitted on all reverse channels corresponding to the assigned forward channels.

**SUMMARY**

This problem is solved by apparatuses and methods according to claims 1, 20, 24, and 31 of the present invention. Advantageous embodiments of the present invention.are claimed in the dependent claims.

Techniques for transmitting pilots on demand on the reverse link and for using channel estimates derived from the on-demand pilots to schedule terminals and to process data for transmission on the forward link are described herein. According to an embodiment of the techniques, a base station selects at least one terminal for on-demand pilot transmission on the reverse link. Each selected terminal is a candidate for receiving data transmission on the forward link. The base station assigns each selected terminal with a time-frequency allocation, which may be for a wideband pilot, a narrowband pilot, or some other type of pilot to be transmitted on the reverse link in addition to any pilot that the terminal is required to transmit. The base station receives and processes the pilot transmission from each selected terminal and derives a channel estimate for the terminal based on the received pilot transmission. The base station may schedule terminals for data transmission on the forward link based on the channel estimates for all terminals. The base station may also process data for transmission to each scheduled terminal based on its channel estimate. For example, the base station may use the channel estimate to perform beamforming or eigensteering as described below.

Various aspects and embodiments of the invention are described in further detail below.

**BRIEF DESCRIPTION OF THE DRAWINGS**

FIG. 1 shows a TDD communication system.
FIG. 2 shows a process for transmitting data on the forward link with on-demand pilot transmission on the reverse link.
FIG. 3 shows an exemplary frame structure for the TDD system.
FIG. 4 shows on-demand pilot transmission on segmented channels.
FIG. 5 shows wideband on-demand pilot transmission.
FIG. 6 shows narrowband on-demand pilot transmission.
FIG. 7 shows on-demand pilot transmission for H-ARQ with two interlaces.
FIG. 8 shows on-demand pilot transmission for H-ARQ with three interlaces.
FIG. 9 shows speculative on-demand pilot transmission.
FIG. 10 shows a block diagram of a base station and two terminals.

**DETAILED DESCRIPTION**

The word "exemplary" is used herein to mean "serving as an example, instance, or illustration." Any embodiment or design described herein as "exemplary" is not necessarily to be construed as preferred or advantageous over other embodiments or designs.

The on-demand pilot transmission techniques described herein may be used for various communication systems such as a frequency division multiplexed (FDM) system that transmits data on different frequency subbands, a code division multiplexed (CDM) system that transmits data using different orthogonal codes, a time division multiplexed (TDM) system that transmits data in different time slots, and so on. An orthogonal frequency division multiplexed (OFDM) system is an FDM system that effectively partitions the overall system bandwidth into multiple (K) orthogonal frequency subbands. These subbands are also called tones, subcarriers, bins, frequency channels, and so on. Each subband is associated with a respective subcarrier that may be modulated with data. An orthogonal frequency division multiple access (OFDMA) system is a multiple-access system that utilizes OFDM.

The on-demand pilot transmission techniques may also be used for a single-input single-output (SISO) system, a multiple-input single-output (MISO) system, a single-input multiple-output (SIMO) system, and a multiple-input multiple-output (MIMO) system. The single input and multiple inputs correspond to one antenna and multiple antennas, respectively, at a transmitter. The single output and multiple outputs correspond to one antenna and multiple antennas, respectively, at a receiver.

For clarity, much of the following description is for a TDD system with reciprocal forward and reverse links. The description also assumes that each base station is equipped with multiple antennas, which are the multiple inputs for a forward link (FL) transmission and the multiple outputs for a reverse link (RL) transmission. The multiple antennas may be used for advanced transmission techniques such as beamforming and eigensteering, which are described below. For simplicity, the portion of the description that relates to OFDM assumes that all K total subbands are usable for data and pilot transmission (i.e., there are no guard subbands).

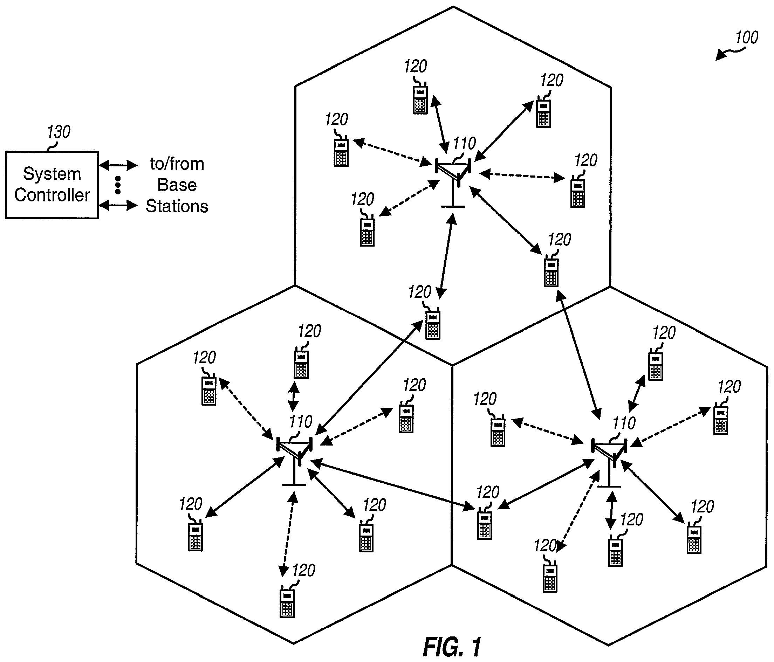

**FIG. 1** shows a TDD communication system 100 with base stations 110 communicating with wireless terminals 120. A base station is a fixed station used for communicating with the terminals and may also be called an access point, a Node B, or some other terminology. Terminals 120 are typically dispersed throughout the system, and each terminal may be fixed or mobile. A terminal may also be called a mobile station, a user equipment (UE), a wireless device, or some other terminology. The terms "terminal" and "user" are used interchangeably herein. Each terminal may communicate with one or possibly multiple base stations on the forward and reverse links at any given moment. In FIG. 1, a solid line with arrows on both ends indicates data transmission on the forward and/or reverse link at the current time, and a broken line with arrows on both ends indicates potential data transmission at a future time. For a centralized architecture, a system controller 130 provides coordination and control for base stations 110.

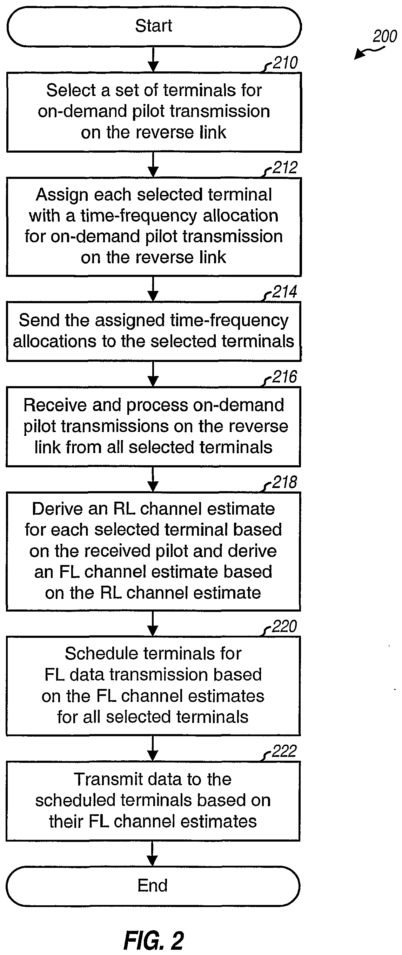

**FIG. 2** shows a process 200 performed by a base station for data transmission on the forward link with on-demand pilot transmission on the reverse link. Initially, the base station selects a set of one or more terminals for on-demand pilot transmission on the reverse link (block 210). The base station may serve many terminals on the forward link but may be able to transmit data to only a subset of these terminals at any given moment. The terminals selected for on-demand pilot transmission on the reverse link may be terminals that are currently receiving FL data transmission from the base station, terminals that are scheduled for FL data transmission in an upcoming time interval, terminals that might receive FL data transmission in the future, or a combination thereof. The on-demand pilots are in addition to any pilot that the terminals are required to transmit.

The base station assigns each selected terminal with a time-frequency allocation for on-demand pilot transmission on the reverse link (block 212). The time-frequency allocation for each selected terminal indicates a specific time interval and/or specific frequency subbands on which to transmit an on-demand pilot, which may be a wideband pilot, a narrowband pilot, or some other type of pilot. The time-frequency allocation for each selected terminal may be dependent on various factors such as the channel structures used by the system for the forward and reverse links, the manner in which the on-demand pilot is transmitted, the intended use of the on-demand pilot, and so on. The assigned time-frequency allocations are explicitly and/or implicitly signaled to the selected terminals (block 214). For example, a terminal that currently receives FL data transmission may transmit an on-demand pilot on the reverse link without explicit signaling whereas a terminal that will or might be scheduled for FL data transmission may receive explicit signaling indicating the assigned time-frequency allocation.

The base station receives and processes on-demand pilot transmissions on the reverse link from all selected terminals (block 216). The base station derives an RL channel estimate for each selected terminal based on the pilot received from that terminal (block 218). For a TDD system, the forward and reverse links may be assumed to be reciprocal. The base station can then derive an FL channel estimate for each selected terminal based on its RL channel estimate (also block 218). The on-demand pilot transmissions allow the base station to obtain the latest forward link channel information for the terminals that will or might be scheduled for FL data transmission without incurring a large overhead or consuming a large amount of reverse link resources.

The base station may employ advanced scheduling and/or transmission techniques in order to improve the performance of the FL data transmission. The base station may schedule terminals for FL data transmission based on the FL channel estimates for all terminals selected for on-demand pilot transmission on the reverse link (block 220). For example, the base station may perform (1) multi-user diversity scheduling and select terminals with good FL channel estimates for FL data transmission, (2) frequency-sensitive scheduling and select terminals for FL data transmission on subbands with good FL channel gains, and/or (3) other types of channel dependent scheduling. The base station may also transmit data to the scheduled terminals based on their FL channel estimates (block 222). For example, the base station may perform beamforming to direct a FL data transmission to a scheduled terminal. The base station may also perform eigensteering to transmit multiple data streams to a scheduled terminal. Beamforming, eigensteering, and various blocks in FIG. 2 are described below.

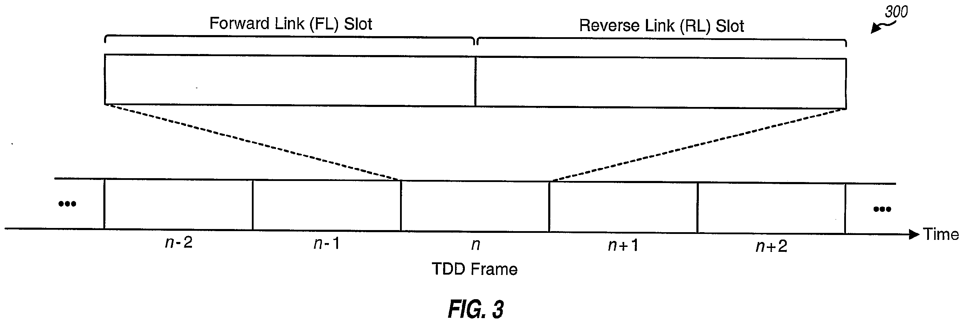

**FIG. 3** shows an exemplary frame structure 300 for TDD system 100. Data transmission on the forward and reverse links occurs in units of TDD frames. Each TDD frame may span a fixed or variable time duration. Each TDD frame is further partitioned into (1) a forward link (FL) slot during which data and pilot are transmitted on the forward link and (2) a reverse link (RL) slot during which data and pilot are transmitted on the reverse link. The FL slot may precede the RL slot as shown in FIG. 3, or vice versa. Each slot may have a fixed or variable time duration.

The terminals may transmit on-demand pilots on the reverse link in various manners. The on-demand pilots may be wideband pilots that allow the base station to employ advanced scheduling techniques as well as advanced transmission techniques. The on-demand pilots may also be narrowband pilots that allow the base station to employ advanced transmission techniques on specific subbands. Several embodiments of on-demand pilot transmission are described below.

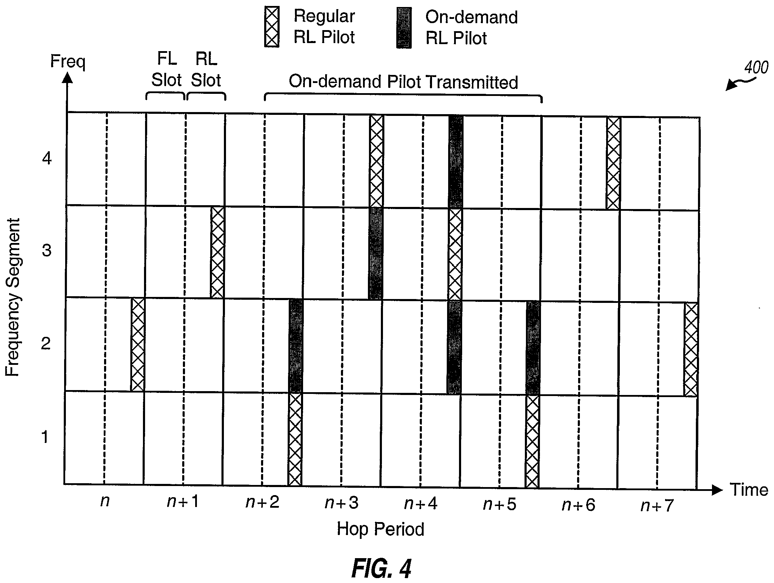

**FIG. 4** shows an embodiment of on-demand pilot transmission on segmented channels. For this embodiment, a channel structure 400 with frequency hopping is used for signaling transmission on the reverse link. The overall system bandwidth is divided into S frequency segments, where in general S > 1. For example, the system bandwidth may be 20 MHz, four segments may be formed as shown in FIG. 4, and each segment may be 5 MHz. S signaling channels are formed with the S segments. Each signaling channel is mapped to one segment in each hop period and hops from segment to segment over time to achieve frequency diversity. A hop period may span one TDD frame (as shown in FIG. 4) or multiple TDD frames. The hopping may be based on a frequency hopping (FH) function/sequence $f(s,n)$ that selects a specific segment $s$ for each hop period $n$.

Each terminal is assigned one signaling channel for transmission of signaling on the reverse link. The signaling may include, e.g., a channel quality indicator (CQI), acknowledgments (ACKs) for packets received on the forward link, and so on. The signaling channel for one terminal is shown by the cross-hashed boxes in FIG. 4.

Each terminal also transmits a regular pilot on the assigned signaling channel. The regular pilot is a pilot that the terminal is required to transmit. A terminal may transmit the regular pilot and signaling separately (e.g., using TDM, FDM, or CDM) or may embed the pilot within the signaling. For example, a terminal may transmit an N-bit signaling value by (1) identifying a code sequence corresponding to that signaling value from among $2^N$ possible code sequences, (2) generating a waveform for that code sequence, and (3) transmitting the waveform. A base station receives the transmitted waveform, determines a hypothesized code sequence that is most likely to have been transmitted based on the received waveform, removes the hypothesized code sequence from the received waveform, and processes the resultant waveform to estimate the RL channel response.

A base station can obtain an RL channel estimate for a terminal based on the regular pilot sent on the signaling channel assigned to that terminal. The base station may transmit data to the terminal on all or a portion of the segment used by the assigned signaling channel. In this case, the base station can use the RL channel estimate for the assigned signaling channel for FL data transmission to the terminal. The base station may also transmit data to the terminal on one or more segments that are not used by the assigned signaling channel. In this case, the base station can direct the terminal to transmit an on-demand pilot on the segment(s) that will be used by the base station. For the example shown in FIG. 4, the terminal transmits an on-demand pilot on segment 2 in hop period $n + 2$, segment 3 in hop period $n + 3$, segments 2 and 4 in hop period $n + 4$, and segment 2 in hop period $n + 5$.

FIG. 4 shows an example in which the on-demand pilot is sent on one or more additional segments that are adjacent to the segment used by the assigned signaling channel. In general, the on-demand pilot may be sent on any number of segments and on any of the segments. The on-demand pilot transmission reduces RL overhead while providing the necessary feedback for the base station to effectively transmit data on the forward link.

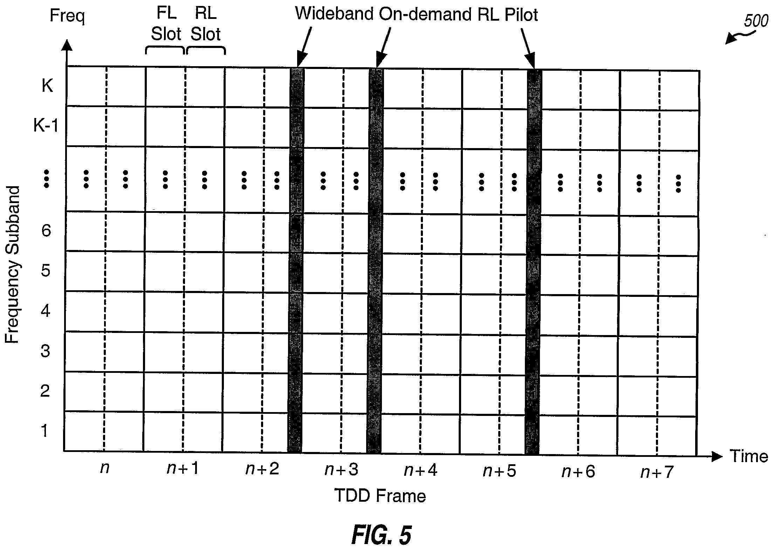

**FIG. 5** shows an embodiment of wideband on-demand pilot transmission for a channel structure 500. For this embodiment, each terminal transmits a regular pilot along with data on the reverse link when scheduled for RL data transmission and transmits no pilot when not scheduled. Each terminal transmits a wideband on-demand pilot on the reverse link whenever directed by a base station. Multiple terminals may transmit wideband on-demand pilots simultaneously in a time window designated for on-demand pilot transmission. This time window may occur in each TDD frame (as shown in FIG. 5), each scheduling interval, and so on. The wideband on-demand pilots may be generated in various manners. To mitigate pilot-to-pilot interference among multiple terminals, the wideband on-demand pilots transmitted by the terminals may be orthogonalized in the frequency domain or the time domain.

In an embodiment, a terminal generates a wideband on-demand pilot in the frequency domain using CDM. The terminal covers a pilot symbol for each frequency subband with an orthogonal code assigned to the terminal. This orthogonal code may be a Walsh code, an orthogonal variable spreading factor (OVSF) code, a quasi-orthogonal function (QOF), and so on. Covering is a process whereby a symbol to be transmitted is multiplied by all L chips of an L-chip orthogonal code to generate L covered symbols, which are sent in L symbol periods. For an OFDM-based system, the terminal further processes the covered symbols for all K subbands in each symbol period to generate an OFDM symbol for that symbol period. The terminal transmits the wideband on-demand pilot in an integer multiple of L symbol periods. Each terminal is assigned a different orthogonal code. A base station is able to recover the wideband on-demand pilot from each terminal based on the orthogonal code assigned to that terminal.

In another embodiment, a terminal generates a wideband on-demand pilot in the time domain using CDM. For this embodiment, the terminal covers a pilot symbol with its assigned L-chip orthogonal code to generate L covered symbols. The terminal then spectrally spreads the L covered symbols across the entire system bandwidth (e.g., all K subbands in an OFDM-based system) with a pseudo-random number (PN) code that is common for all terminals. The terminal transmits the wideband on-demand pilot in an integer multiple of L sample periods. The base station is able to recover the wideband on-demand pilot from each terminal based on the assigned orthogonal code.

In yet another embodiment, a terminal generates a wideband on-demand pilot in the time domain with a PN code assigned to that terminal. For this embodiment, a terminal spectrally spreads a pilot symbol across the entire system bandwidth with its assigned PN code, which is used for both orthogonalization and spectral spreading. Each terminal is assigned a different PN code, which may be a different time shift of a common PN code. The base station is able to recover the wideband on-demand pilot from each terminal based on the assigned PN code.

In yet another embodiment, a terminal generates a wideband on-demand pilot in the frequency domain using FDM. For example, M sets of subbands may be formed with the K total subbands with each set containing K/M subbands. The K/M subbands in each set may be (e.g., uniformly) distributed from across the entire system bandwidth to allow a base station to derive a channel estimate for the full system bandwidth. The M subband sets may be assigned to M different terminals for on-demand pilot transmission. Each terminal transmits its wideband on-demand pilot on its assigned subband set. The base station can recover the wideband on-demand pilot for each terminal from the assigned subband set. The base station can derive a channel estimate for the entire system bandwidth by performing interpolation, least squares approximation, and so on, on the received wideband pilot.

For the example shown in FIG. 5, a terminal transmits a wideband on-demand pilot in TDD frames $n + 2$, $n + 3$ and $n + 5$. A base station can obtain an RL channel estimate for this terminal for the entire system bandwidth based on the wideband on-demand pilot. The base station may transmit data to the terminal on all or a portion of the system bandwidth using an FL channel estimate derived from the RL channel estimate.

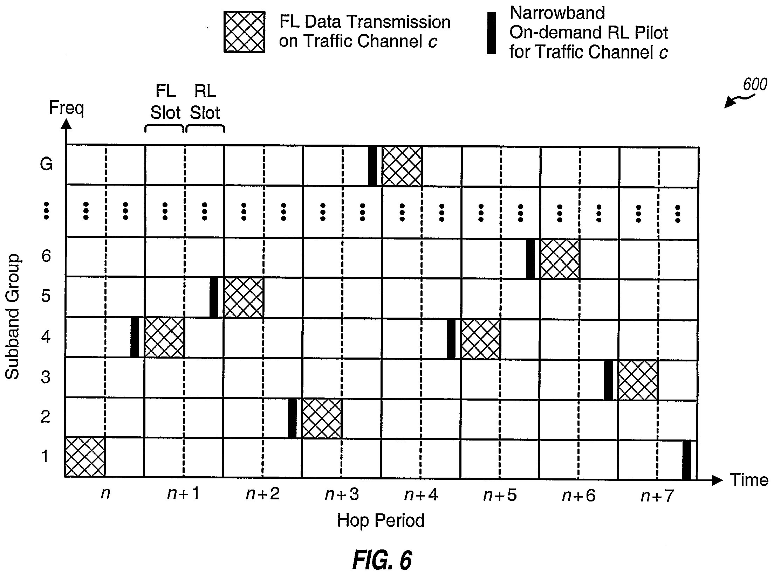

**FIG. 6** shows an embodiment of narrowband on-demand pilot transmission. For this embodiment, a channel structure 600 with frequency hopping is used for data transmission on the forward link. The K total subbands are arranged into G groups and each group contains S subbands, where in general G>1, S≥1, and G·S≤K. The subbands in each group may be contiguous or non-contiguous (e.g., distributed across the K total subbands). G traffic channels may be formed with the G subband groups. Each traffic channel is mapped to one subband group in each hop period and hops from subband group to subband group over time to achieve frequency diversity. A hop period may span one TDD frame (as shown in FIG. 6) or multiple TDD frames. G frequency hopping FL traffic channels are available for FL data transmission. FIG. 6 shows the subband groups used for one FL traffic channel c. The channel structure for the reverse link may be the same or different from the channel structure for the forward link.

A base station may transmit data to up to G terminals using the G FL traffic channels. The base station selects terminals for on-demand pilot transmission, assigns FL traffic channels to these terminals, and directs the terminals to transmit narrowband on-demand pilots on the reverse link on the assigned FL traffic channels. The selected terminals may or may not be transmitting data on the reverse link to the base station. The selected terminals transmit their narrowband on-demand pilots in a designated time window, which may occur in each TDD frame (as shown in FIG. 6), each hop period, each scheduling interval, and so on. The on-demand pilot transmission on each FL traffic channel precedes the FL data transmission on the same traffic channel so that the RL channel estimate obtained from the on-demand pilot can be used for the FL data transmission. For the example shown in FIG. 6, FL traffic channel c uses subband group 4 in hop period $n + 1$, subband group 5 in hop period $n + 2$, subband group 2 in hop period $n + 3$, and so on. A terminal that is assigned FL traffic channel c for on-demand pilot transmission transmits a narrowband on-demand pilot on subband group 4 in hop period $n$, subband group 5 in hop period $n + 1$, subband group 2 in hop period $n + 2$, and so on. Multiple terminals may transmit narrowband on-demand pilots on the same traffic channel in the same data frame using CDM, TDM, and/or FDM.

The base station obtains a narrowband RL channel estimate for each selected terminal based on the narrowband on-demand pilot received from that terminal. The base station can use the narrowband RL channel estimate (e.g., for beamforming) for FL data transmission to the terminal. The base station may also collect narrowband channel estimates over a period of time to obtain a wideband channel estimate, which may be used for frequency-sensitive scheduling.

FIGS. 4 through 6 show three exemplary on-demand pilot transmission schemes for the reverse link. The wideband on-demand pilots (e.g., as shown in FIG. 5) allow the base station to obtain more channel information for the forward link at the expense of more reverse link resources. The narrowband on-demand pilots (e.g., as shown in FIG. 6) allow the base station to obtain channel information for only the subbands of interest, which minimizes reverse link resource consumption. A combination of wideband and narrowband on-demand pilots may also be used. For example, terminals that might be scheduled for FL data transmission may transmit wideband on-demand pilots whereas terminals that are already scheduled may transmit narrowband on-demand pilots. Various other on-demand pilot transmission schemes may also be devised, and this is within the scope of the invention.

In general, the on-demand pilots may be transmitted in any part of the RL slot. In an embodiment, a portion of the RL slot (e.g., a few OFDM symbols) in each TDD frame is reserved for the on-demand pilots. The reserved portion may be located toward the end of the RL slot in order to minimize the amount of time between the RL on-demand pilot transmission and the FL data transmission that uses the FL channel estimate derived from the on-demand pilot. In another embodiment, the on-demand pilots are transmitted in a reserved portion of every P TDD frames, where P may be any integer. P may also be individually selected for each terminal. For example, P may be a small value for a mobile terminal with rapidly changing channel conditions and may be a larger value for a stationary terminal with relatively static channel conditions. In yet another embodiment, the on-demand pilots are transmitted on top of, and superimposed over, other transmissions on the reverse link. For this embodiment, the on-demand pilots act as interference to the other RL transmissions, and vice versa. The on-demand pilots and the other RL transmissions are then transmitted in a manner to account for this interference. The on-demand pilots may also be transmitted in other manners.

The on-demand pilot transmission may be used in a system that employs an incremental redundancy (IR) transmission scheme for the forward link, which is also commonly called a hybrid automatic repeat request (H-ARQ) transmission scheme. With H-ARQ, a base station encodes a data packet to generate a coded packet and further partitions the coded packet into multiple coded blocks. The first coded block may contain sufficient information to allow a terminal to recover the data packet under good channel condition. Each remaining coded block contains additional redundancy information for the data packet.

The base station transmits the coded blocks for the data packet to the terminal, one coded block at a time starting with the first coded block. The first block transmission is also called the first H-ARQ transmission, and each subsequent block transmission is also called an H-ARQ retransmission. The terminal receives each transmitted coded block, reassembles the symbols for all received coded blocks, decodes the reassembled symbols, and determines whether the packet was decoded correctly or in error. If the packet was decoded correctly, then the terminal sends an acknowledgment (ACK) to the base station, and the base station terminates the transmission of the packet. Conversely, if the packet was decoded in error, then the terminal sends a negative acknowledgment (NAK), and the base station transmits the next coded block (if any is left) for the packet. The block transmission and decoding continue until the packet is decoded correctly by the terminal or all coded blocks for the packet have been transmitted by the base station.

Typically, ACKs are explicitly sent and NAKs are implicitly sent (e.g., presumed by the absence of ACKs), or the converse may be true. For clarity, the following description assumes that ACKs and NAKs are both explicitly sent.

For each block transmission in an H-ARQ transmission, some delays are incurred for the terminal to decode the packet and send feedback (e.g., ACK or NAK) for the packet, and for the base station to receive the feedback and determine whether to transmit another coded block for the packet. To account for this delay, the transmission time line may be partitioned into multiple (Q) interlaces, where in general Q > 1. For example, two interlaces may be defined whereby interlace 1 may be for TDD frames with even indices and interlace 2 may be for TDD frames with odd indices. The base station may transmit one coded block on a traffic channel in each TDD frame and may transmit coded blocks for Q different packets on the Q interlaces.

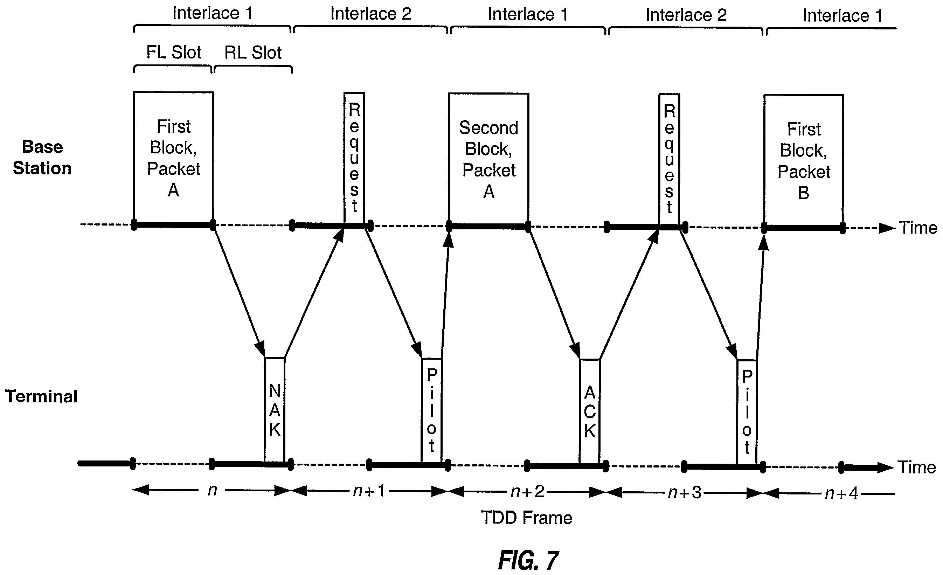

**FIG. 7** shows an embodiment of an H-ARQ transmission with on-demand pilot transmission in a TDD system with two interlaces. For the example shown in FIG. 7, the base station transmits the first coded block for a new packet A to terminal $u$ on interlace 1 in TDD frame $n$. Terminal $u$ receives the first coded block, decodes packet A in error, and sends a NAK in TDD frame $n$. The base station receives the NAK, determines that another coded block needs to be transmitted for packet A, and sends to terminal $u$ a request for an on-demand pilot in TDD frame $n + 1$. This pilot request may be implicit and not actually sent since both the base station and terminal $u$ know that the next block transmission on interlace 1 is for terminal $u$. The base station may transmit a coded block for another packet to terminal $u$ or another terminal on interlace 2 in TDD frame $n + 1$, which is not shown in FIG. 7 for clarity.

Terminal $u$ receives the pilot request and transmits an on-demand pilot on the reverse link in TDD frame $n + 1$. The base station receives the on-demand pilot from terminal $u$, derives an RL channel estimate for terminal $u$, processes the second coded block for packet A with the RL channel estimate, and transmits this block to terminal $u$ on interlace 1 in TDD frame $n + 2$. Terminal $u$ receives the second coded block, decodes packet A correctly based on the received first and second coded blocks, and sends an ACK in TDD frame $n + 2$. The base station receives the ACK and determines that the transmission of packet A can be terminated.

The base station may transmit a new packet B on interlace 1 starting in TDD frame $n + 4$ to terminal $u$ or another terminal. The base station selects one or more terminals (terminal $u$ and/or other terminals) for on-demand pilot transmission and explicitly and/or implicitly sends a pilot request to each selected terminal in TDD frame $n + 3$. Each selected terminal receives the pilot request and transmits an on-demand pilot on the reverse link in TDD frame $n + 3$. The base station receives and processes the on-demand pilots from all selected terminals and derives an RL channel estimate for each terminal. The base station may employ advanced scheduling techniques and schedule a terminal for FL data transmission based on the RL channel estimates for all selected terminals. The base station then transmits the first coded block for the new packet B (e.g., using the RL channel estimate) to the scheduled terminal on interlace 1 in TDD frame $n + 4$. For this embodiment, the base station is able to obtain the RL channel estimate for the scheduled terminal prior to the first block transmission and is able to use advanced scheduling and/or transmission techniques for the first block transmission.

The processing shown in FIG. 7 is for one FL traffic channel. The same processing may be performed for each FL traffic channel supported by the base station.

For the embodiment shown in FIG. 7, the base station transmits data on one interlace $a$ (e.g., interlace 1) and sends pilot requests on the other interlace $b$ (e.g., interlace 2). The feedback (ACK or NAK) for the current packet transmission on interlace $a$ determines which terminal should transmit on-demand pilot on the reverse link. If another block transmission is needed, then the terminal currently receiving the packet transmission on interlace $a$ should continue to transmit the on-demand pilot. Otherwise, another terminal might be scheduled for a new packet transmission on interlace $a$ and should transmit the on-demand pilot.

The embodiment shown in FIG. 7 assumes that a terminal can receive a block transmission on a given TDD frame, decode the packet, and send feedback within the same TDD frame. A delay of one TDD frame is incurred for the base station to send a pilot request and for the terminal to transmit an on-demand pilot on the reverse link. If the decoding delay is longer than the interlace duration and the terminal cannot send feedback within the same TDD frame, then one or more additional interlaces may be defined to account for the additional delay incurred to support on-demand pilot transmission.

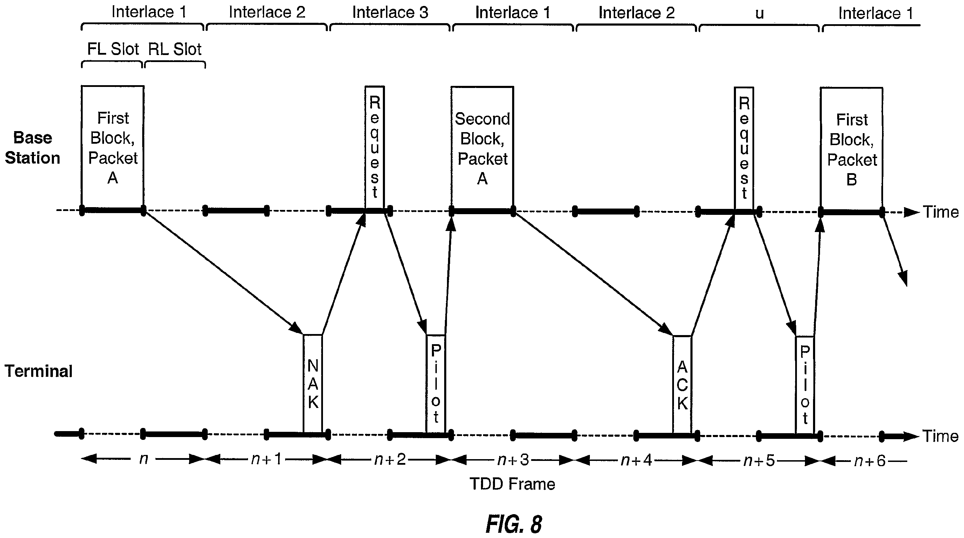

**FIG. 8** shows an embodiment of an H-ARQ transmission with on-demand pilot transmission in a TDD system with three interlaces. For the example shown in FIG. 8, the base station transmits the first coded block for packet A to terminal $u$ on interlace 1 in TDD frame $n$. Terminal $u$ receives the first coded block, decodes packet A in error, and because of decoding delay sends a NAK in TDD frame $n + 1$. The base station receives the NAK and sends a pilot request to terminal $u$ in TDD frame $n + 2$. Terminal $u$ receives the pilot request and transmits an on-demand pilot on the reverse link in TDD frame $n + 2$. The base station receives and processes the on-demand pilot from terminal $u$, derives an RL channel estimate, and transmits the second coded block for packet A to terminal $u$ on interlace 1 in TDD frame $n + 3$.

Terminal $u$ receives the second coded block, decodes packet A correctly, and because of decoding delay sends an ACK in TDD frame $n + 4$. The base station receives the ACK, selects one or more terminals for on-demand pilot transmission, and sends a pilot request to each selected terminal in TDD frame $n + 5$. Each selected terminal receives the pilot request and transmits an on-demand pilot on the reverse link in TDD frame $n + 5$. The base station receives and processes the on-demand pilots from all selected terminals, schedules a terminal for FL data transmission, and transmits the first coded block for packet B to the scheduled terminal on interlace 1 in TDD frame $n + 6$.

In general, any number of interlaces may be defined to account for retransmission latency for H-ARQ. The interlace duration may be sufficiently long to allow a terminal to quickly acknowledge a block transmission, e.g., as shown in FIG. 7. However, if the interlace duration is long in comparison to the coherence time of the communication link, then the FL channel estimate obtained from the on-demand pilot may be stale during the ensuing FL data transmission. More interlaces of shorter duration can account for decoding delay and also shorten the time between the RL on-demand pilot transmission and the ensuing FL data transmission.

For the embodiments shown in FIGS. 7 and 8, one TDD frame of delay is incurred to support on-demand pilot transmission for an H-ARQ transmission. This additional delay allows the base station to select one or more terminals for on-demand pilot transmission on the reverse link in each TDD frame. However, this additional delay may increase retransmission latency for H-ARQ, e.g., as shown in FIG. 8. This additional delay may be avoided by sending speculative pilot requests.

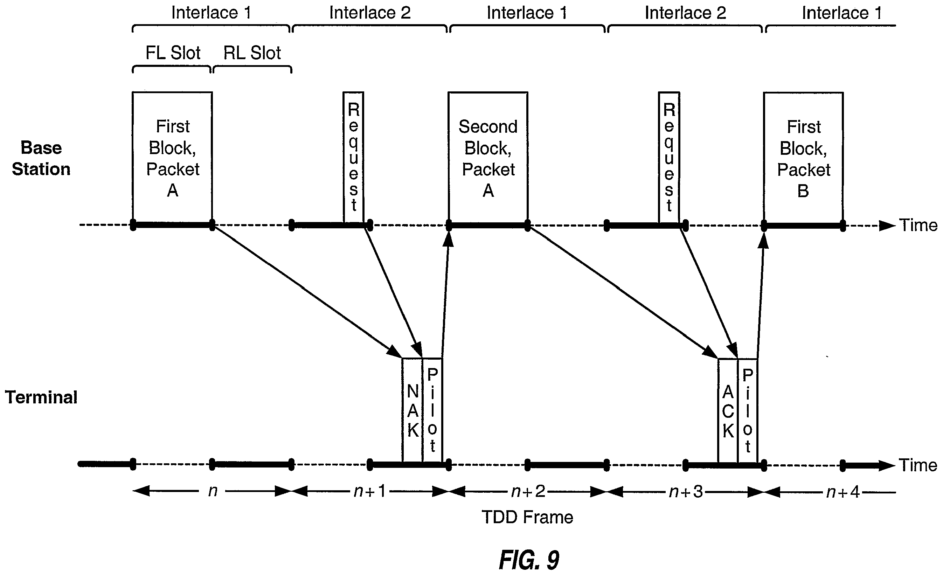

**FIG. 9** shows an embodiment of an H-ARQ transmission with speculative on-demand pilot transmission in a TDD system with two interlaces. For the example shown in FIG. 9, the base station transmits the first coded block for packet A to terminal $u$ on interlace 1 in TDD frame $n$. Terminal $u$ receives the first coded block, decodes packet A in error, and sends a NAK in TDD frame $n + 1$.

The base station has not received the NAK from terminal $u$ during the FL slot in TDD frame $n + 1$ and selects (or speculates) one or more terminals that might receive a block transmission on interlace 1 in TDD frame $n + 2$. For example, the base station may request on-demand pilots from terminal $u$ (which is currently receiving the packet transmission on interlace 1) and one or more other terminals that might receive a block transmission in TDD frame $n + 2$. The number of terminals to select and which terminals to select may be dependent on various factors such as the likelihood of the current packet transmission for terminal $u$ being terminated, the amount of reverse link resources available for on-demand pilot transmission, and so on. The base station sends the pilot requests to all selected terminals in TDD frame $n + 1$. Each selected terminal transmits an on-demand pilot on the reverse link in TDD frame $n + 1$.

The base station receives the NAK from terminal $u$ in TDD frame $n + 1$. The base station also receives and processes the on-demand pilot from terminal $u$ in TDD frame $n + 1$ (assuming that terminal $u$ was selected for on-demand pilot transmission), derives an RL channel estimate for terminal $u$, and transmits the second coded block for packet A to terminal $u$ on interlace 1 in TDD frame $n + 2$. Terminal $u$ receives the second coded block, decodes packet A correctly, and sends an ACK in TDD frame $n + 3$.

The base station has not received the ACK from terminal $u$ during the FL slot in TDD frame $n + 3$ and selects one or more terminals that might receive a block transmission on interlace 1 in TDD frame $n + 4$. The base station sends pilot requests to all selected terminals in TDD frame $n + 3$. The base station receives the ACK from terminal $u$ in TDD frame $n + 3$ and terminates the packet transmission for terminal $u$. The base station then schedules terminal $u$ or another terminal for a new packet transmission on interlace 1 starting in TDD frame $n + 4$. If the scheduled terminal was selected for on-demand pilot transmission in TDD frame $n + 3$, then the base station can derive an FL channel estimate for this terminal based on the on-demand pilot received from the terminal in TDD frame $n + 3$ and can then use the FL channel estimate for the FL data transmission in TDD frame $n + 4$. If the scheduled terminal is not one of the terminals selected for on-demand pilot transmission in TDD frame $n + 3$, then the base station does not use advanced transmission techniques for the first block transmission to the terminal. The base station can use the advanced transmission techniques for subsequent block transmissions to this terminal.

As shown in FIG. 9, with speculative pilot requests, no additional delay (and thus no additional retransmission latency) is incurred to support on-demand pilot transmission. The base station may select more than one terminal for on-demand pilot transmission on the reverse link at the cost of additional resources.

In another embodiment of on-demand pilot transmission, a terminal that is scheduled for data transmission on the forward link transmits an on-demand pilot on the reverse link for the entire duration in which the terminal is scheduled. For this embodiment, the base station does not have an FL channel estimate for the terminal at the start of the scheduled interval and transmits data without knowledge of the FL channel response in the first transmission to the terminal. The scheduled terminal is implicitly requested to transmit an on-demand pilot on the reverse link. The base station can derive an FL channel estimate for the terminal based on the on-demand pilot and can employ advanced transmission techniques for each subsequent transmission to the terminal. This embodiment has several advantages including (1) efficient utilization of the reverse link resources, (2) no additional delay to support on-demand pilot transmission and hence small retransmission latency, and (3) minimal or no signaling needed to send pilot requests.

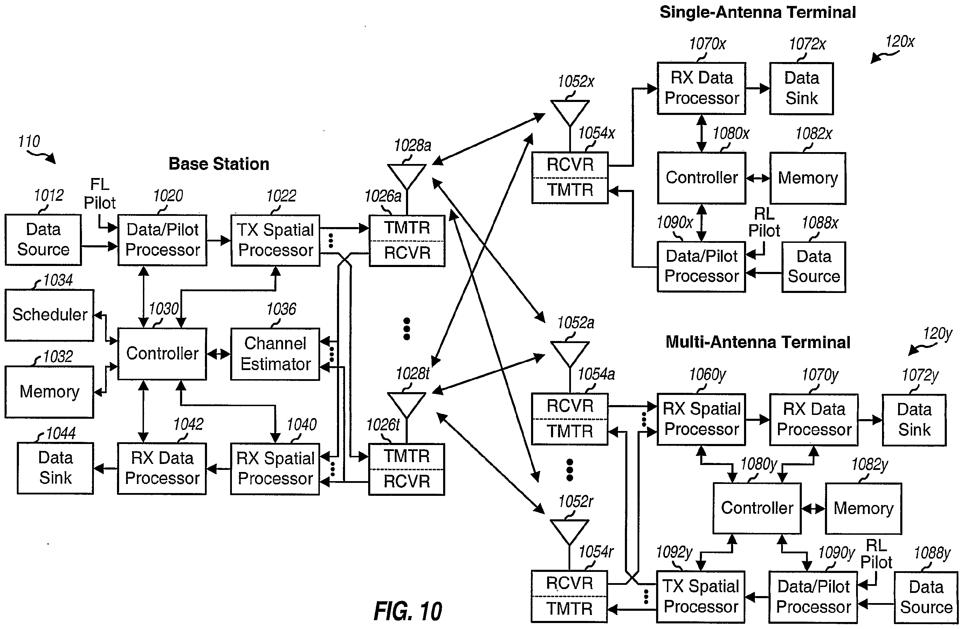

**FIG. 10** shows an embodiment of base station 110 and two terminals 120x and 120y in TDD system 100. Base station 110 is equipped with multiple (T) antennas 1028a through 1028t, terminal 120x is equipped with a single antenna 1052x, and terminal 120y is equipped with multiple (R) antennas 1052a through 1052r.

On the forward link, at base station 110, a data/pilot processor 1020 receives traffic data from a data source 1012 for all scheduled terminals and signaling (e.g., pilot requests) from a controller 1030. Data/pilot processor 1020 encodes, interleaves, and symbol maps the traffic data and signaling to generate data symbols and further generates pilot symbols for the forward link. As used herein, a data symbol is a modulation symbol for traffic/packet data, a pilot symbol is a symbol for pilot (which is data that is known *a priori* by both the transmitter and receiver), a modulation symbol is a complex value for a point in a signal constellation for a modulation scheme (e.g., M-PSK or M-QAM), and a symbol is any complex value. A TX spatial processor 1022 performs spatial processing on the data symbols for advance transmission techniques, multiplexes in the pilot symbols, and provides transmit symbols to transmitter units

(TMTR) 1026a through 1026t. Each transmitter unit 1026 processes its transmit symbols (e.g., for OFDM) and generates an FL modulated signal. The FL modulated signals from transmitter units 1026a through 1026t are transmitted from antennas 1028a through 1028t, respectively.

At each terminal 120, one or multiple antennas 1052 receive the transmitted FL modulated signals, and each antenna provides a received signal to a respective receiver unit (RCVR) 1054. Each receiver unit 1054 performs processing complementary to the processing performed by transmitter units 1026 and provides received symbols. For multi-antenna terminal 120y, a receive (RX) spatial processor 1060y performs spatial processing on the received symbols to obtain detected symbols, which are estimates of the transmitted data symbols. For each terminal, an RX data processor 1070 symbol demaps, deinterleaves, and decodes the received or detected symbols and provides decoded data to a data sink 1072. RX data processor 1070 also provides detected signaling (e.g., pilot request) to a controller 1080.

On the reverse link, traffic data from a data source 1088 and signaling (e.g., ACKs/NAKs) to be sent by each terminal 120 are processed by a data/pilot processor 1090, further processed by a TX spatial processor 1092 if multiple antennas are present, conditioned by transmitter unit(s) 1054, and transmitted from antenna(s) 1052. At base station 110, the transmitted RL modulated signals from terminals 120 are received by antennas 1028, conditioned by receiver units 1026, and processed by an RX spatial processor 1040 and an RX data processor 1042 in a manner complementary to the processing performed at the terminals. RX data processor 1042 provides decoded data to a data sink 1044 and detected signaling to controller 1030.

Controllers 1030, 1080x and 1080y control the operation of various processing units at base station 110 and terminals 120x and 120y, respectively. Memory units 1032, 1082x and 1082y store data and program codes used by controllers 1030, 1080x and 1080y, respectively. A scheduler 1034 schedules terminals for data transmission on the forward and reverse links.

For on-demand pilot transmission, controller 1030 may select terminals for pilot transmission on the reverse link. At each selected terminal, data/pilot processor 1090 generates the on-demand pilot, which may be processed by a TX spatial processor 1092 if present, conditioned by transmitter unit(s) 1054 and transmitted from antenna(s) 1052. At base station 110, the on-demand pilot transmissions from all selected terminals are received by antennas 1028, processed by receiver units 1026, and provided to a channel estimator 1036. Channel estimator 1036 estimates the RL channel response for each selected terminal, determines the FL channel estimate for each selected terminal based on its RL channel estimate, and provides the FL channel estimates for all selected terminals to controller 1030. Scheduler 1034 may use the FL channel estimates for advanced scheduling techniques (e.g., frequency-sensitive scheduling) to schedule terminals for FL data transmission. Controller 1030 and/or TX spatial processor 1022 may use the FL channel estimates for advanced transmission techniques (e.g., beamforming or eigensteering) to transmit data to the scheduled terminals.

In FIG. 10, a MISO channel is formed between base station 110 and single-antenna terminal 120x. This MISO may be characterized by a $1 \times T$ channel response row vector $\underline{h}_x(k)$ for each subband $k$, which may be expressed as:

$$\underline{\mathbf{h}}_x(k) = [h_{x,1}(k) \; h_{x,2}(k) \; ... \; h_{x,\mathrm{T}}(k)] \;, \qquad \text{for } k \in \{1, ..., \mathrm{K}\}, \qquad \text{Eq (1)}$$

where $h_{x,j}(k)$, for $j = 1, ..., T$, is the complex channel gain between antenna $j$ at base station 110 and the single antenna at terminal 120x for subband $k$. The channel response is also a function of time, which is not shown for simplicity.

Base station 110 may perform spatial processing for beamforming for terminal 120x, as follows:

$$\underline{\mathbf{x}}_x(k) = \underline{\mathbf{h}}_x^H(k) \cdot s_x(k) \;, \qquad \text{Eq (2)}$$

where $s_x(k)$ is a data symbol to be sent on subband $k$ to terminal 120x, $\underline{x}_x(k)$ is a vector with T transmit symbols to be sent from the T antennas at the base station, and "$H$" denotes a conjugate transpose. The beamforming steers the FL data transmission toward terminal 120x and improves performance. Equation (2) indicates that the FL channel estimate is needed for beamforming to terminal 120x.

Terminal 120x obtains received symbols for the FL data transmission, which may be expressed as:

$$r_x(k) = \underline{\mathbf{h}}_x(k) \cdot \underline{\mathbf{x}}_x(k) + w_x(k) = \underline{\mathbf{h}}_x(k) \cdot \underline{\mathbf{h}}_x^H(k) \cdot s_x(k) + w_x(k) \quad,$$

$$= \|\underline{\mathbf{h}}_x(k)\|^2 \cdot s_x(k) + w_x(k) \quad,$$

Eq (3)

where $\|\underline{\mathbf{h}}_x(k)\|^2$ is an overall gain observed by data symbol $s_x(k)$, $r_x(k)$ is the received symbol for subband $k$ at terminal 120x, and $w_x(k)$ is the noise at terminal 120x. Terminal 120x does not need to be aware of the beamforming performed by base station 110 and can process the received symbols as if the FL data transmission was sent from one antenna.

In FIG. 10, a MIMO channel is formed between base station 110 and multi-antenna terminal 120y. This MIMO may be characterized by an R×T channel response matrix $\underline{\mathbf{H}}_y(k)$ for each subband $k$, which may be expressed as:

$$\underline{\mathbf{H}}_y(k) = \begin{bmatrix} h_{y,1,1}(k) & h_{y,1,2}(k) & \cdots & h_{y,1,T}(k) \\ h_{y,2,1}(k) & h_{y,2,2}(k) & \cdots & h_{y,2,T}(k) \\ \vdots & \vdots & \ddots & \vdots \\ h_{y,R,1}(k) & h_{y,R,2}(k) & \cdots & h_{y,R,T}(k) \end{bmatrix}, \qquad \text{for } k \in \{1, \ldots, K\}, \qquad \text{Eq (4)}$$

where $h_{y,i,j}(k)$, for $i = 1,\ldots,R$ and $j = 1, \ldots, T$, is the complex channel gain between antenna $j$ at base station 110 and antenna $i$ at terminal 120y for subband $k$. The channel response matrix $\underline{\mathbf{H}}_y(k)$ may be diagonalized via singular value decomposition (SVD), as follows:

$$\underline{\mathbf{H}}_y(k) = \underline{\mathbf{U}}_y(k) \cdot \underline{\Sigma}_y(k) \cdot \underline{\mathbf{V}}_y^H(k) \quad,$$

Eq (5)

where $\underline{\mathbf{U}}_y(k)$ is a unitary matrix of left eigenvectors, $\underline{\mathbf{V}}_y(k)$ is a unitary matrix of right eigenvectors, and $\underline{\Sigma}_y(k)$ is a diagonal matrix of singular values for subband $k$. The diagonal elements of $\underline{\Sigma}_y(k)$ are singular values that represent the channel gains for S eigenmodes of $\underline{\mathbf{H}}_y(k)$, where S≤min{T, R}. The eigenmodes may be viewed as orthogonal spatial channels. Base station 110 may use the right eigenvectors (or columns) in $\underline{\mathbf{V}}_y(k)$ to transmit data on the eigenmodes of $\underline{\mathbf{H}}_y(k)$.

Base station 110 may transmit data on the best eigenmode of $\underline{\mathbf{H}}_y(k)$ by performing spatial processing with the eigenvector for this best eigenmode, e.g., similar to the beamforming shown in equation (2). Base station 110 may also transmit data on multiple eigenmodes of $\underline{\mathbf{H}}_y(k)$ by performing spatial processing for eigensteering, as follows:

$$\underline{\mathbf{x}}_y(k) = \underline{\mathbf{V}}_y(k) \cdot \underline{\mathbf{s}}_y(k) \quad,$$

Eq (6)

where $\underline{\mathbf{s}}_y(k)$ is a vector with up to S data symbols to be sent simultaneously on subband $k$ to terminal 120y and $\underline{\mathbf{x}}_y(k)$ is a vector with T transmit symbols to be sent from T antennas at base station 110 to terminal 120y. Equations (5) and (6) indicate that the FL channel estimate is needed for eigensteering to terminal 120y.

Terminal 120y obtains received symbols for the FL data transmission, which may be expressed as:

$$\underline{\mathbf{r}}_y(k) = \underline{\mathbf{H}}_y(k) \cdot \underline{\mathbf{x}}_y(k) + \underline{\mathbf{w}}_y(k) \quad,$$

Eq (7)

where $\underline{\mathbf{r}}_y(k)$ is a vector with R received symbols for subband $k$ and $\underline{\mathbf{w}}_y(k)$ is the noise vector at terminal 120y.

Terminal 120y performs receiver spatial processing (or spatial matched filtering) to recover the transmitted data symbols, as follows:

$$\hat{\underline{\mathbf{s}}}_y(k) = \underline{\mathbf{M}}_y(k) \cdot \underline{\mathbf{r}}_y(k) = \underline{\mathbf{s}}_y(k) + \tilde{\underline{\mathbf{w}}}_y(k) \quad,$$

Eq (8)

where $\underline{\mathbf{M}}_y(k)$ is a spatial filter matrix for subband $k$ and $\tilde{\underline{\mathbf{w}}}_y(k)$ is the post-detection noise. Terminal 120y may derive the spatial filter matrix $\underline{\mathbf{M}}_y(k)$ using any one of the following:

$$\underline{\mathbf{M}}_{y1}(k) = \underline{\Sigma}_y^{-1}(k) \cdot \underline{\mathbf{U}}_y^{H}(k) \ , \qquad\qquad\qquad \text{Eq (9)}$$

$$\underline{\mathbf{M}}_{y2}(k) = [\underline{\mathbf{H}}_{y,eff}^{H}(k) \cdot \underline{\mathbf{H}}_{y,eff}(k)]^{-1} \cdot \underline{\mathbf{H}}_{y,eff}^{H}(k) \ , \qquad\qquad \text{Eq (10)}$$

$$\underline{\mathbf{M}}_{y3}(k) = \underline{\mathbf{D}}_y(k) \cdot [\underline{\mathbf{H}}_{y,eff}^{H}(k) \cdot \underline{\mathbf{H}}_{y,eff}(k) + \sigma_n^2 \cdot \underline{\mathbf{I}}]^{-1} \cdot \underline{\mathbf{H}}_{y,eff}^{H}(k) \ , \qquad \text{Eq (11)}$$

where $\mathbf{H}_{y,eff}(k) = \underline{\mathbf{H}}_y(k) \cdot \underline{\mathbf{V}}_y(k)$,
$\underline{\mathbf{D}}_y(k) = [\text{diag } [\underline{\mathbf{M}}'_{y3}(k) \cdot \underline{\mathbf{H}}_{y,eff}(k)]]^{-1}$, and

$$\underline{\mathbf{M}}'_{y3}(k) = [\underline{\mathbf{H}}_{y,eff}^{H}(k) \cdot \underline{\mathbf{H}}_{y,eff}(k) + \sigma_n^2 \cdot \underline{\mathbf{I}}]^{-1} \cdot \underline{\mathbf{H}}_{y,eff}^{H}(k) \ .$$

Equation (9) is for a matched filtering technique, equation (10) is for a zero-forcing technique, and equation (11) is for a minimum mean square error (MMSE) technique.

Single-antenna terminal 120x transmits an on-demand pilot on the reverse link when requested by base station 110. Base station 110 can derive estimates of $h_{x,j}(k)$ for $j$ =1, ..., T based on the on-demand pilot from terminal 120x.

Multi-antenna terminal 120y also transmits an on-demand pilot on the reverse link when requested by base station 110. Terminal 120y may transmit the on-demand pilot in various manners to allow base station 110 to derive estimates of $h_{i,i,j}(k)$, for $i$ = 1, ..., R and $j$ = 1, ..., T. In an embodiment, terminal 120y covers the pilot from each antenna with a different orthogonal code using CDM. R different orthogonal codes are used for the R antennas at terminal 120y. In another embodiment, terminal 120y transmits the pilot for each antenna on a different subset of subbands using FDM. R different subband subsets are used for the R antennas. In yet another embodiment, terminal 120y transmits the pilot for each antenna on a different time interval using TDM. Terminal 120y may also transmit R pilots from the R antennas using a combination of CDM, FDM, and TDM. In any case, base station 110 can recover the pilot from each terminal antenna based on the orthogonal code, the subband subset, and/or the time interval used for that antenna.

Terminal 120y may have only one transmit chain and may be able to transmit from one antenna but receive from multiple antennas. In this case, terminal 120y may transmit an on-demand pilot from only one antenna. Base station 110 may derive one row of the channel response matrix $\underline{\mathbf{H}}_y(k)$ corresponding to the antenna used by terminal 120y to transmit the on-demand pilot. Base station 110 may then perform pseudo eigen-beamforming to improve performance. For perform pseudo eigen-beamforming, base station 110 fills the remaining rows of $\underline{\mathbf{H}}_y(k)$ with (1) random values, (2) random values selected such that the columns of $\underline{\mathbf{H}}_y(k)$ are orthogonal to one another, (3) rows of a Fourier matrix, or (4) elements of some other matrix. Base station 110 may use $\underline{\mathbf{H}}_y(k)$ for beamforming as shown in equation (2) or eigensteering as shown in equation (6). Base station 110 may also perform QR factorization on $\underline{\mathbf{H}}_y(k)$ to obtain a unitary matrix $\underline{\mathbf{Q}}_y(k)$ and an upper triangle matrix $\underline{\mathbf{R}}_y(k)$. Base station 110 may then transmit data using $\underline{\mathbf{Q}}_y(k)$.

The above description assumes that the forward and reverse links are reciprocal. The frequency responses of the transmit and receive chains at the base station may be different from the frequency responses of the transmit and receive chains at the terminals. In particular, the frequency responses of the transmit and receive chains used for FL transmission may be different from the frequency responses of the transmit and receive chains used for RL transmission. In this case, calibration may be performed to account for the differences in the frequency responses so that the overall channel response observed by the FL transmission is reciprocal of the overall channel response observed by the RL transmission.

As noted above, the on-demand pilot transmission techniques may be used for various communication systems. These techniques may be advantageously used for an OFDMA system, a frequency hopping OFDMA (FH-OFDMA) system, and other systems with narrowband transmissions on the reverse link. In such a system, a regular narrowband pilot may be sent along with the RL data transmission, e.g., using TDM. The base station may use this regular narrowband pilot for coherent demodulation of the RL data transmission and for time/frequency tracking of the reverse link. Requiring many or all terminals to continuously or frequently transmit regular wideband pilots on the reverse link to support FL data transmission would result in very inefficient use of the RL resources. Instead, wideband and/or narrowband on-demand pilots may be sent if and when needed on the reverse link to facilitate FL channel estimation and data transmission.

The on-demand pilot transmission techniques described herein may be implemented by various means. For example, these techniques may be implemented in hardware, software, or a combination thereof. The processing units used to perform or support on-demand pilot transmission at the base station may be implemented within one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, other electronic units designed to perform the functions described herein, or a combination thereof. The processing units used to perform or support on-demand pilot transmission at the terminal may also be implemented within one or more ASICs, DSPs, and so on.

**Claims**

1. An apparatus in a communication system (200), comprising:

   means for sending to at least one terminal (120) a request for on-demand pilot transmission on a reverse link, the at least one terminal (120) being candidate for data transmission on a forward link;
   means for processing on-demand pilot transmission from each of the at least one terminal (120);
   means for deriving a channel estimate for each of the at least one terminal (120) based on the on-demand pilot transmission; and
   means for transmitting data on the forward link to each terminal (120) scheduled for data transmission using the channel estimate.

2. The apparatus of claim 1, wherein the means for selecting the at least one terminal (120) for on-demand pilot transmission on the reverse link comprises means for receiving feedback for prior transmissions of data on the forward link, and means for selecting the at least one terminal (120) for on-demand pilot transmission on the reverse link based on the received feedback.

3. The apparatus of claim 1, further comprising:

   means for scheduling terminals (120) for data transmission on the forward link based on the channel estimate derived for the at least one terminal (120).

4. The apparatus of claim 1, further comprising:

   means for performing spatial processing for the data transmission to each scheduled terminal (120) based on the channel estimate.

5. An apparatus according to claim 1, wherein
   a controller (1030) is operative to select at least one terminal (120) for on-demand pilot transmission on a reverse link, the at least one terminal (120) being candidate for data transmission on a forward link;
   a channel estimator (1036) is operative to process on-demand pilot transmission from each of the at least one terminal (120) and to derive a channel estimate for each terminal (120) based on the on-demand pilot transmission from the terminal (120); and
   a processor (1020) is operative to process data for transmission on the forward link to each of one or more terminals (120) scheduled for data transmission using the channel estimate for the terminal (120).

6. The apparatus of claim 5, wherein the controller (1030) is operative to assign each of the at least one terminal (120) with a time-frequency allocation for on-demand pilot transmission on the reverse link.

7. The apparatus of claim 5, wherein each of the at least one terminal (120) is assigned a frequency segment for transmission of signaling and on-demand pilot on the reverse link, and wherein the channel estimator is operative to process on-demand pilot transmission on at least one additional frequency segment from each of the at least one terminal (120).

8. The apparatus of claim 5, wherein the channel estimator (1036) is operative to process a wideband on-demand pilot transmission from each of the at least one terminal (120) and to derive a wideband channel estimate for each terminal (120) based on the wideband on-demand pilot transmission from the terminal (120).

9. The apparatus of claim 5, wherein the channel estimator (1036) is operative to process a narrowband on-demand pilot transmission from each of the at least one terminal (120) and to derive a narrowband channel estimate for each terminal (120) based on the narrowband on-demand pilot transmission from the terminal (120).

10. The apparatus of claim 5, wherein the controller (1030) is operative to request each of the at least one terminal (120) to transmit an on-demand wideband pilot or an on-demand narrowband pilot.

11. The apparatus of claim 5, wherein the channel estimator (1036) is operative to receive on-demand pilot transmission from each terminal (120) scheduled for data transmission prior to each transmission of data to the terminal (120).

12. The apparatus of claim 5 wherein the controller (1030) is operative to select each terminal (120) scheduled for data transmission on the forward link for on-demand pilot transmission on the reverse link.

13. The apparatus of claim 5, wherein the controller (1030) is operative to receive feedback for prior transmissions of data on the forward link and to select the at least one terminal (120) for on-demand pilot transmission on the reverse link based on the received feedback.

14. The apparatus of claim 5, further comprising: a scheduler operative (1034) to schedule the one or more terminals (120) for data transmission on the forward link based on the channel estimate derived for the at least one terminal (120) selected for on-demand pilot transmission on the reverse link.

15. The apparatus of claim 5, wherein the channel estimator (1036) is operative to derive a wideband channel estimate for each of the at least one terminal (120), and wherein the scheduler (1034) is operative to schedule the one or more terminals (120) for data transmission on frequency subbands determined by the wideband channel estimate for the at least one terminal (120).

16. The apparatus of claim 5, further comprising: a scheduler operative (1034) to schedule data transmission on the forward link such that an on-demand pilot transmission is received from each terminal (120) scheduled for data transmission between consecutive transmissions of data to the terminal (120).

17. The apparatus of claim 5, wherein the processor (1020) is operative to perform beamforming for a terminal (120) scheduled for data transmission using the channel estimate.

18. The apparatus of claim 5, wherein the processor (1020) is operative to perform eigensteering for a terminal (120) scheduled for data transmission using the channel estimate.

19. The apparatus of claim 5, wherein the processor (1020) is operative to perform pseudo eigen-beamforming for a terminal (120) scheduled for data transmission using the channel estimate.

20. A method of transmitting pilot in a communication system (200), comprising:

   sending to at least one terminal (120) a request for on-demand pilot transmission on a reverse link (210), the at least one terminal (120) being candidate for data transmission on a forward link;
   processing on-demand pilot transmission (216) from each of the at least one terminal (120);
   deriving a channel estimate for each of the at least one terminal (120) based on the on-demand pilot transmission; and
   transmitting data on the forward link to each terminal (120) scheduled for data transmission using the channel estimate.

21. The method of claim 20, wherein the selecting the at least one terminal (120) for on-demand pilot transmission on the reverse link comprises
   receiving feedback for prior transmissions of data on the forward link, and
   selecting the at least one terminal (120) for on-demand pilot transmission on the reverse link based on the received feedback.

22. The method of claim 20, further comprising:

   scheduling terminals (120) for data transmission on the forward link based on the channel estimate derived for the at least one terminal (120).

23. The method of claim 20, further comprising:

   performing spatial processing for the data transmission to each scheduled terminal (120) based on the channel estimate.

24. A computer program comprising instructions for executing the methods of one of claims 20 to 23.

25. A terminal (120) comprising:

a controller operative (1080) to receive a request for on-demand pilot transmission on a reverse link and to determine a time-frequency allocation for the on-demand pilot transmission; and
a processor operative (1090, 1092) to generate an on-demand pilot for trans-mission on the reverse link on the time-frequency allocation, wherein the on-demand pilot transmission on the reverse link is used for scheduling the terminal (120) for data transmission on a forward link, for spatial processing of data transmission to the terminal (120), or for both scheduling and spatial processing.

26. The terminal (120) of claim 25, wherein the processor (1090, 1092) is operative to process signaling for transmission on a frequency segment assigned to the terminal (120), wherein the controller is operative to receive the request for on-demand pilot transmission on at least one additional frequency segment not as-signed to the terminal (120), and wherein the processor is further operative to generate the on-demand pilot for transmission on the at least one additional frequency segment.

27. The terminal (120) of claim 25, wherein the processor (1090, 1092) is operative to generate a wideband on-demand pilot for transmission on the reverse link, and wherein data transmission on the reverse link is narrowband.

28. The terminal (120) of claim 25, wherein the processor (1090, 1092) is operative to generate a narrowband on-demand pilot for transmission on the reverse link and on frequency subbands usable for data transmission to the terminal (120) on the forward link.

29. The terminal (120) of claim 25, wherein the processor (1090, 1092) is operative to generate the on-demand pilot using time division multiplexing, TDM, frequency division multiplexing, FDM, code division multiplexing, CDM, or a combination thereof.

30. The terminal (120) of claim 25, wherein the processor (1090, 1092) is operative to generate the on-demand pilot for transmission from multiple antennas using time division multiplexing, TDM, frequency division multiplexing, FDM, code division multiplexing, CDM, or a combination thereof.

31. The terminal (120) of claim 25, wherein the controller (1080) is operative to determine whether a packet transmitted to the terminal (120) is decoded correctly and to implicitly receive the request for on-demand pilot transmission on the reverse link if the packet is not decoded correctly.

32. A method of transmitting on-demand pilot in a communication system (100), comprising:

receiving at a terminal (120) a request for on-demand pilot transmission on a reverse link;
determining a time-frequency allocation for the on-demand pilot transmission; and transmitting an on-demand pilot on the reverse link on the time-frequency allocation, wherein the on-demand pilot transmission on the reverse link is used for scheduling the terminal (120) for data transmission on a forward link, for spatial processing of data transmission to the terminal (120), or for both scheduling and spatial processing.

33. The method of claim 32, further comprising:

transmitting signaling on a frequency segment assigned to the terminal (120), and wherein the request is for on-demand pilot transmission on at least one addition-al frequency segment not assigned to the terminal (120).

34. The method of claim 32, wherein the transmitting the on-demand pilot on the reverse link comprises transmitting a wideband on-demand pilot on the reverse link.

35. The method of claim 32, wherein the transmitting the on-demand pilot on the reverse link comprises transmitting a narrowband on-demand pilot on the reverse link and on frequency subbands usable for data trans-mission to the terminal (120) on the forward link.

**36.** A computer program comprising instructions for executing the methods of one of claims 32 to 35.

**Patentansprüche**

**1.** Vorrichtung in einem Kommunikationssystem (200), aufweisend:

Mittel zum Senden an wenigstens ein Endgerät (120) einer Anfrage für Übertragung von auf Abruf-Piloten auf einer Rückverbindung, wobei das wenigstens eine Endgerät (120) ein Kandidat für Datenübermittlung auf einer Vorwärtsverbindung ist;
Mittel zum Verarbeiten von Übermittlung von auf Abruf-Piloten von jedem des wenigstens einen Endgeräts (120);
Mittel zum Ableiten einer Kanalschätzung für jedes des wenigstens einen Endgeräts (120) basierend auf der Übermittlung von auf Abruf-Piloten; und
Mittel zum Übermitteln von Daten auf der Vorwärtsverbindung an jedes Endgerät (120), das für Datenübermittlung geplant ist, unter Verwendung der Kanalschätzung.

**2.** Vorrichtung gemäß Anspruch 1, wobei das Mittel zum Auswählen des wenigstens einen Endgeräts (120) für Übermittlung von auf Abruf-Piloten auf der Rückverbindung umfasst Mittel zum Empfangen von Rückmeldung für vorherige Übermittlungen von Daten auf der Vorwärtsverbindung, und Mittel zum Auswählen des wenigstens einen Endgeräts (120) für Übermittlung von auf Abruf-Piloten auf der Rückwärtsverbindung basierend auf der empfangenen Rückmeldung.

**3.** Vorrichtung gemäß Anspruch 1, weiterhin aufweisend:

Mittel zum Planen von Endgeräten (120) für Datenübermittlung auf der Vorwärtsverbindung basierend auf der Kanalschätzung, die für das wenigstens eine Endgerät (120) abgeleitet wird.

**4.** Vorrichtung gemäß Anspruch 1, weiterhin aufweisend:

Mittel zum Durchführen räumlicher Verarbeitung für die Datenübermittlung an jedes geplante Endgerät (120) basierend auf der Kanalschätzung.

**5.** Vorrichtung gemäß Anspruch 1, wobei
eine Steuerung (1030) betreibbar ist, um wenigstens ein Endgerät (120) für Übermittlungen von auf Abruf-Piloten auf eine Rückwärtsverbindung auszuwählen, wobei das wenigstens eine Endgerät (120) ein Kandidat für Datenübermittlung auf einer Vorwärtsverbindung ist;
ein Kanalschätzer (1036) betreibbar ist, um Übermittlung von auf Abruf-Piloten von jedem des wenigstens einen Endgeräts (120) zu verarbeiten und eine Kanalschätzung für jedes Endgerät (120) basierend auf der Übermittlung von auf Abruf-Piloten von dem Endgerät (120) abzuleiten; und
ein Prozessor (1020) betreibbar ist, um Daten für Übermittlung auf der Vorwärtsverbindung an jedes aus einem oder mehreren Endgeräten (120), die geplant für Datenübermittlung unter Verwendung der Kanalschätzung für das Endgerät (120) sind, zu verarbeiten.

**6.** Vorrichtung gemäß Anspruch 5, wobei die Steuerung (1030) betreibbar ist, um jedem des wenigstens einen Endgeräts (120) eine Zeit-Frequenz-Zuordnung für Übermittlung von auf Abruf-Piloten auf der Rückwärtsverbindung zuzuweisen.

**7.** Vorrichtung gemäß Anspruch 5, wobei jedem des wenigstens einen Endgeräts (120) ein Frequenzabschnitt für Übermittlung von Signalisierung und auf Abruf-Piloten auf der Rückwärtsverbindung zugewiesen wird, und wobei der Kanalschätzer betreibbar ist, um Übermittlungen von auf Abruf-Piloten auf wenigstens einem zusätzlichen Frequenzabschnitt von jedem des wenigstens einen Endgeräts (120) zu verarbeiten.

**8.** Vorrichtung gemäß Anspruch 5, wobei der Kanalschätzer (1036) betreibbar ist, um eine breitbandige Übermittlung von auf Abruf-Piloten von jedem des wenigstens einen Endgerät (120) zu verarbeiten und um eine breitbandige Kanalschätzung für jedes Endgerät (120) basierend auf der breitbandigen Übermittlung von auf Abruf-Piloten von dem Endgerät (120) abzuleiten.

**9.** Vorrichtung gemäß Anspruch 5, wobei der Kanalschätzer (1036) betreibbar ist, um eine schmalbandige Übermittlung von auf Abruf-Piloten von jedem des wenigstens einen Endgeräts (120) zu verarbeiten und um eine schmalbandige Kanalschätzung für jedes Endgerät (120) basierend auf der schmalbandigen Übermittlung von auf Abruf-Piloten von dem Endgerät (120) abzuleiten.

**10.** Vorrichtung gemäß Anspruch 5, wobei die Steuerung (1030) betreibbar ist, um jedes des wenigstens einen Endgeräts (120) anzufragen, um einen breitbandigen auf Abruf-Piloten oder einen schmalbandigen auf Abruf-Piloten zu übermitteln.

**11.** Vorrichtung gemäß Anspruch 5, wobei der Kanalschätzer (1036) betreibbar ist, um Übermittlung von auf Abruf-Piloten von jedem Endgerät (120), das für Datenübermittlung geplant ist, vor jeder Übermittlung von Daten an das Endgerät (120) zu empfangen.

**12.** Vorrichtung gemäß Anspruch 5, wobei die Steuerung (1030) betreibbar ist, um jedes Endgerät (120), das für Datenübermittlung auf der Vorwärtsverbindung für Übermittlung von auf Abruf-Piloten auf der Rückwärtsverbindung auszuwählen.

**13.** Vorrichtung gemäß Anspruch 5, wobei die Steuerung (1030) betreibbar ist, um Rückmeldung für vorherige Übermittlungen von Daten auf der Vorwärtsverbindung zu empfangen und das wenigstens eine Endgerät (120) für Übermittlung von auf Abruf-Piloten auf der Vorwärtsverbindung basierend auf der empfangenen Rückmeldung auszuwählen.

**14.** Vorrichtung gemäß Anspruch 5, weiterhin aufweisend: einen Planer der betreibbar (1034) ist, um das eine oder die mehreren Endgeräte (120) für Datenübermittlung auf der Vorwärtsverbindung basierend auf der Kanalschätzung, die für das wenigstens eine Endgerät abgeleitet wurde, das für Übermittlung von auf Abruf-Piloten auf der Vorwärtsverbindung ausgewählt wurde, zu planen.

**15.** Vorrichtung gemäß Anspruch 5, wobei der Kanalschätzer (1036) betreibbar ist, eine breitbandige Kanalschätzung für jedes des wenigstens einen Endgeräts (120) abzuleiten, und wobei der Planer (1034) betreibbar ist, um das eine oder die mehreren Endgeräte (120) für Datenübermittlung auf Frequenzunterbändern, die durch die breitbandige Kanalschätzung für das wenigstens eine Endgerät (120) bestimmt wurde, zu planen.

**16.** Vorrichtung gemäß Anspruch 5, weiterhin aufweisend: einen Planer, der betreibbar (1034) ist, um Datenübermittlung auf der Vorwärtsverbindung zu planen, so dass eine Übermittlung von auf Abruf-Piloten von jedem Endgerät (120), das für Datenübermittlung zwischen aufeinanderfolgenden Übermittlungen von Daten an das Endgerät (120) geplant ist, empfangen wird.

**17.** Vorrichtung gemäß Anspruch 5, wobei der Prozessor (1020) betreibbar ist, um Strahlformung für ein Endgerät (120), das für Datenübermittlung unter Verwendung der Kanalschätzung geplant ist, durchzuführen.

**18.** Vorrichtung gemäß Anspruch 5, wobei der Prozessor (1020) betreibbar ist, um Eigensteuerung für ein Endgerät (120), das für Datenübermittlung unter Verwendung der Kanalschätzung geplant ist, durchzuführen.

**19.** Vorrichtung gemäß Anspruch 5, wobei der Prozessor (1020) betreibbar ist, um Pseudo-Eigen-Strahlformung für ein Endgerät (120), das für Datenübermittlung unter Verwendung der Kanalschätzung geplant ist, durchzuführen.

**20.** Verfahren zur Übermittlung von Piloten in einem Kommunikationssystem (200) umfassend:

Senden an wenigstens ein Endgerät (120) einer Anfrage für Übertragung von auf Abruf-Piloten auf einer Rückwärtsverbindung (210), wobei das wenigstens eine Endgerät (120) ein Kandidat für Datenübermittlung auf einer Vorwärtsverbindung ist;
Verarbeiten von Übermittlung von auf Abruf-Piloten (216) von jedem des wenigstens einen Endgeräts (120);
Ableiten einer Kanalschätzung für jedes des wenigstens einen Endgeräts (120) basierend auf der Übermittlung von auf Abruf-Piloten; und
Übermitteln von Daten auf der Vorwärtsverbindung an jedes Endgerät (120), das für Datenübermittlung geplant ist, unter Verwendung der Kanalschätzung.

**21.** Verfahren gemäß Anspruch 20, wobei das Auswählen des wenigstens einen Endgeräts (120) für Übermittlung von auf Abruf-Piloten auf der Rückwärtsverbindung umfasst

Empfangen von Rückmeldung für vorherige Übermittlungen von Daten auf der Vorwärtsverbindung, und Auswählen des wenigstens einen Endgeräts (120) für Übermittlung von auf Abruf-Piloten auf der Rückwärtsverbindung basierend auf der empfangenen Rückmeldung.

**22.** Verfahren gemäß Anspruch 20, weiterhin umfassend:

Planen von Endgeräten (120) für Datenübermittlung auf der Vorwärtsverbindung basierend auf der Kanalschätzung, die für das wenigstens eine Endgerät (120) abgeleitet wurde.

**23.** Verfahren gemäß Anspruch 20, weiterhin umfassend:

Durchführen räumlicher Verarbeitung für die Datenübermittlung an jedes geplante Endgerät (120) basierend auf der Kanalschätzung.

**24.** Computerprogramm umfassend Anweisungen zum Ausführen der Verfahren gemäß einem der Ansprüche 20 bis 23.

**25.** Endgerät (120) aufweisend:

eine Steuerung, die betreibbar (1080) ist, um eine Anfrage für Übermittlung von auf Abruf-Piloten auf einer Rückwärtsverbindung zu empfangen und eine Zeit-Frequenz-Zuordnung für die Übermittlung von auf Abruf-Piloten zu bestimmen; und
einen Prozessor, der betreibbar (1090, 1092) ist, um einen auf Abruf-Piloten für Übermittlung auf der Rückwärtsverbindung auf der Zeit-Frequenz-Zuordnung zu erzeugen, wobei die Übermittlung von auf Abruf-Piloten auf der Rückwärtsverbindung verwendet wird für Planung des Endgeräts (120) für Datenübermittlung auf einer Vorwärtsverbindung, für räumliche Verarbeitung von Datenübermittlungen an das Endgerät (120) oder für sowohl Planung als auch räumliche Verarbeitung.

**26.** Endgerät (120) gemäß Anspruch 25, wobei der Prozessor (1090, 1092) betreibbar ist, um Signalisierung für Übermittlung auf einem Frequenzabschnitt, der dem Endgerät (120) zugewiesen ist, zu verarbeiten, wobei die Steuerung betreibbar ist, um die Anfrage für Übermittlung von auf Abruf-Piloten auf wenigstens einem zusätzlichen Frequenzabschnitt, der dem Endgerät (120) nicht zugewiesen ist, zu empfangen, und wobei der Prozessor ist weiterhin betreibbar, um den auf Abruf-Piloten für Übermittlung auf dem wenigstens einen zusätzlichen Frequenzabschnitt zu erzeugen.

**27.** Endgerät (120) gemäß Anspruch 25, wobei der Prozessor (1090, 1092) betreibbar ist, um einen breitbandige auf Abruf-Piloten für Übermittlung auf der Rückwärtsverbindung zu erzeugen, und wobei die Datenübermittlung auf der Rückwärtsverbindung schmalbandig ist.

**28.** Endgerät (120) gemäß Anspruch 25, wobei der Prozessor (1090, 1092) betreibbar ist, um einen schmalbandigen auf Abruf-Piloten für Übermittlung auf der Rückwärtsverbindung und auf Frequenz-Unterbändern, die für Datenübermittlung an das Endgerät (120) auf der Vorwärtsverbindung verwendbar sind, zu erzeugen.

**29.** Endgerät (120) gemäß Anspruch 25, wobei der Prozessor (1090, 1092) betreibbar ist, um den auf Abruf-Piloten unter Verwendung von Zeitmultiplexen, TDM, Frequenzmultiplexen, FDM, Codemultiplexen, CDM oder einer Kombination aus ihnen zu erzeugen.

**30.** Endgerät (120) gemäß Anspruch 25, wobei der Prozessor (1090, 1092) betreibbar ist, um den auf Abruf-Piloten für Übermittlung von mehreren Antennen unter Verwendung von Zeitmultiplexen, TDM, Frequenzmultiplexen, FDM, Codemultiplexen, CDM oder einer Kombination aus ihnen zu erzeugen.

**31.** Endgerät (120) gemäß Anspruch 25, wobei die Steuerung (1080) betreibbar ist, um bestimmen, ob ein Paket, das an das Endgerät (120) übermittelt wurde, korrekt dekodiert wird und um die Anfrage für Übermittlung von auf Abruf-Piloten auf der Rückwärtsverbindung implizit zu empfangen, wenn das Paket nicht korrekt dekodiert wird.

**32.** Verfahren zur Übermittlung von auf Abruf-Piloten in einem Kommunikationssystem (100) umfassend:

Empfangen an einem Endgerät (120) einer Anfrage für Übermittlung von auf Abruf-Piloten auf einer Rückwärtsverbindung;

Bestimmen einer Zeit-Frequenz-Zuordnung für die Übermittlung von auf Abruf-Piloten; und
Übermitteln eines auf Abruf-Piloten auf der Rückwärtsverbindung auf der Zeit-Frequenz-Zuordnung, wobei die Übermittlung von auf Abruf-Piloten auf der Rückwärtsverbindung für Planen des Endgeräts (120) für Datenübermittlung auf einer Vorwärtsverbindung, für räumliche Verarbeitung von Datenübermittlung an das Endgerät (120) oder für sowohl Planen als auch räumliche Verarbeitung verwendet wird.

33. Verfahren gemäß Anspruch 32, weiterhin umfassend:

Übermitteln von Signalisierung auf einem Frequenzabschnitt, der dem Endgerät (120) zugewiesen ist, und wobei die Anfrage für Übermittlung von auf Abruf-Piloten auf wenigstens einem zusätzlichen Frequenzabschnitt ist, der dem Endgerät (120) nicht zugewiesen ist.

34. Verfahren gemäß Anspruch 32, wobei die Übermittlung des auf Abruf-Piloten auf der Rückwärtsverbindung umfasst Übermitteln eines breitbandigen auf Abruf-Piloten auf der Rückwärtsverbindung.

35. Verfahren gemäß Anspruch 32, wobei die Übermittlung des auf Abruf-Piloten auf der Rückwärtsverbindung umfasst Übermitteln eines schmalbandigen auf Abruf-Piloten auf der Rückwärtsverbindung und auf Frequenzunterbändern, die für Datenübermittlung an das Endgerät (120) auf der Vorwärtsverbindung verwendbar sind.

36. Computerprogramm umfassend Anweisungen zum Ausführen der Verfahren gemäß einem der Ansprüche 32 bis 35.

**Revendications**

1. Appareil dans un système de communication (200), comprenant :

des moyens pour envoyer à au moins un terminal (120) une requête d'émission de pilote à la demande sur une liaison de retour, l'au moins un terminal (120) étant candidat pour une émission de données sur une liaison aller ;
des moyens pour traiter une émission de pilote à la demande à partir de chacun de l'au moins un terminal (120) ;
des moyens pour obtenir une estimation de canal pour chacun de l'au moins un terminal (120) sur la base de l'émission de pilote à la demande ; et
des moyens pour émettre des données sur la liaison aller à chaque terminal (120) programmé pour une émission de données en utilisant l'estimation de canal.

2. Appareil selon la revendication 1, dans lequel les moyens pour sélectionner l'au moins un terminal (120) pour une émission de pilote à la demande sur la liaison de retour comprennent des moyens pour recevoir une réaction pour des émissions de données précédentes sur la liaison aller, et
des moyens pour sélectionner l'au moins un terminal (120) pour une émission de pilote à la demande sur la liaison de retour sur la base de la réaction reçue.

3. Appareil selon la revendication 1, comprenant en outre :

des moyens pour programmer des terminaux (120) pour une émission de données sur la liaison aller sur la base de l'estimation de canal obtenue pour l'au moins un terminal (120).

4. Appareil selon la revendication 1, comprenant en outre :

des moyens pour effectuer un traitement spatial pour l'émission de données à chaque terminal programmé (120) sur la base de l'estimation de canal.

5. Appareil selon la revendication 1, dans lequel un contrôleur (1030) est fonctionnel pour sélectionner au moins un terminal (120) pour une émission de pilote à la demande sur une liaison de retour, l'au moins un terminal (120) étant candidat pour une émission de données sur une liaison aller ;
un estimateur de canal (1036) est fonctionnel pour traiter une émission de pilote à la demande à partir de chacun de l'au moins un terminal (120) et pour obtenir une estimation de canal pour chaque terminal (120) sur la base de l'émission de pilote à la demande à partir du terminal (120) ; et
un processeur (1020) est fonctionnel pour traiter des données pour une émission sur la liaison aller à chacun de l'un ou plusieurs terminaux (120) programmés pour une émission de données en utilisant l'estimation de canal pour le terminal (120).

6. Appareil selon la revendication 5, dans lequel le contrôleur (1030) est fonctionnel pour attribuer à chacun de l'au moins un terminal (120) une allocation de temps-fréquence pour une émission de pilote à la demande sur une liaison de retour.

7. Appareil selon la revendication 5, dans lequel un segment de fréquence pour une émission de signalisation et d'un pilote à la demande sur la liaison de retour est attribué à chacun de l'au moins un terminal (120), et dans lequel l'estimateur de canal est fonctionnel pour traiter une émission de pilote à la demande sur au moins un segment de fréquence additionnel à partir de chacun de l'au moins un terminal (120).

8. Appareil selon la revendication 5, dans lequel l'estimateur de canal (1036) est fonctionnel pour traiter une émission de pilote à la demande à large bande à partir de chacun de l'au moins un terminal (120) et pour obtenir une estimation de canal à large bande pour chaque terminal (120) sur la base de l'émission de pilote à la demande à large bande à partir du terminal (120).

9. Appareil selon la revendication 5, dans lequel l'estimateur de canal (1036) est fonctionnel pour traiter une émission de pilote à la demande à bande étroite à partir de chacun de l'au moins un terminal (120) et pour obtenir une estimation de canal à bande étroite pour chaque terminal (120) sur la base de l'émission de pilote à la demande à bande étroite à partir du terminal (120).

10. Appareil selon la revendication 5, dans lequel le contrôleur (1030) est fonctionnel pour demander à chacun de l'au moins un terminal (120) de émettre un pilote à la demande à large bande ou un pilote à la demande à bande étroite.

11. Appareil selon la revendication 5, dans lequel l'estimateur de canal (1036) est fonctionnel pour recevoir une émission de pilote à la demande à partir de chaque terminal (120) programmé pour une émission de données avant chaque émission de données au terminal (120).

12. Appareil selon la revendication 5, dans lequel le contrôleur (1030) est fonctionnel pour sélectionner chaque terminal (120) programmé pour une émission de données sur la liaison aller pour une émission de pilote à la demande sur la liaison de retour.

13. Appareil selon la revendication 5, dans lequel le contrôleur (1030) est fonctionnel pour recevoir une réaction pour des émissions de données précédentes sur la liaison aller et pour sélectionner l'au moins un terminal (120) pour une émission de pilote à la demande sur la liaison de retour sur la base de la réaction reçue.

14. Appareil selon la revendication 5, comprenant en outre : un planificateur (1034) fonctionnel pour programmer l'un ou plusieurs terminaux (120) pour une émission de données sur la liaison aller sur la base de l'estimation de canal obtenue pour l'au moins un terminal (120) sélectionné pour une émission de pilote à la demande sur la liaison de retour.

15. Appareil selon la revendication 5, dans lequel l'estimateur de canal (1036) est fonctionnel pour obtenir une estimation de canal à large bande pour chacun de l'au moins un terminal (120), et dans lequel le planificateur (1034) est fonctionnel pour programmer l'un ou plusieurs terminaux (120) pour une émission de données sur des sous-bandes de fréquence déterminées par l'estimation de canal à large bande pour l'au moins un terminal (120).

16. Appareil selon la revendication 5, comprenant en outre : un planificateur (1034) fonctionnel pour programmer une émission de données sur la liaison aller de manière qu'une émission de pilote à la demande soit reçue à partir de chaque terminal (120) programmé pour une émission de données entre des émissions consécutives de données au terminal (120).

17. Appareil selon la revendication 5, dans lequel le processeur (1020) est fonctionnel pour effectuer une formation de faisceau pour un terminal (120) programmé pour une émission de données en utilisant l'estimation de canal.

18. Appareil selon la revendication 5, dans lequel le processeur (1020) est fonctionnel pour effectuer un guidage en mode propre pour un terminal (120) programmé pour une émission de données en utilisant l'estimation de canal.

19. Appareil selon la revendication 5, dans lequel le processeur (1020) est fonctionnel pour effectuer une pseudo formation de faisceau en mode propre pour un terminal (120) programmé pour une émission de données en utilisant l'estimation de canal.

20. Procédé d'émission d'un pilote dans un système de communication sans fil (200), comprenant :

l'envoi à au moins un terminal (120) d'une requête d'émission de pilote à la demande sur une liaison de retour (210), l'au moins un terminal (120) étant candidat pour une émission de données sur une liaison aller ;
le traitement d'une émission de pilote à la demande (216) à partir de chacun de l'au moins un terminal (120) ;
l'obtention d'une estimation de canal pour chacun de l'au moins un terminal (120) sur la base de l'émission de pilote à la demande ; et
l'émission de données sur la liaison aller à chaque terminal (120) programmé pour une émission de données en utilisant l'estimation de canal.

21. Procédé selon la revendication 20, dans lequel la sélection de l'au moins un terminal (120) pour une émission de pilote à la demande sur la liaison de retour comprend
la réception d'une réaction pour des émissions de données précédentes sur la liaison aller, et
la sélection de l'au moins un terminal (120) pour une émission de pilote à la demande sur la liaison de retour sur la base de la réaction reçue.

22. Procédé selon la revendication 20, comprenant en outre :

la programmation de terminaux (120) pour une émission de données sur la liaison aller sur la base de l'estimation de canal obtenue pour l'au moins un terminal (120).

23. Procédé selon la revendication 20, comprenant en outre :

l'exécution d'un traitement spatial pour l'émission de données à chaque terminal programmé (120) sur la base de l'estimation de canal.

24. Programme informatique comprenant des instructions pour mettre en oeuvre les procédés de l'une des revendications 20 à 23.

25. Terminal (120) comprenant :

un contrôleur (1080) fonctionnel pour recevoir une requête d'émission de pilote à la demande sur une liaison de retour et pour déterminer une allocation de temps-fréquence pour l'émission de pilote à la demande ; et
un processeur (1090, 1092) fonctionnel pour générer un pilote à la demande pour une émission sur la liaison de retour sur l'allocation de temps-fréquence, dans lequel la émission de pilote à la demande sur une liaison de retour est utilisée pour programmer le terminal (120) pour une émission de données sur une liaison aller, pour un traitement spatial d'émission de données au terminal (120), ou à la fois pour une programmation et un traitement spatial.

26. Terminal (120) selon la revendication 25, dans lequel le processeur (1090, 1092) est fonctionnel pour traiter une signalisation pour une émission sur un segment de fréquence attribué au terminal (120), dans lequel le contrôleur est fonctionnel pour recevoir la requête d'émission de pilote à la demande sur au moins un segment de fréquence additionnel non attribué au terminal (120), et dans lequel le processeur est fonctionnel en outre pour générer le pilote à la demande pour une émission sur l'au moins un segment de fréquence additionnel.

27. Terminal (120) selon la revendication 25, dans lequel le processeur (1090, 1092) est fonctionnel pour générer un pilote à la demande à large bande pour une émission sur la liaison de retour et dans lequel l'émission de données sur la liaison de retour est à bande étroite.

28. Terminal (120) selon la revendication 25, dans lequel le processeur (1090, 1092) est fonctionnel pour générer un pilote à la demande à bande étroite pour une émission sur la liaison de retour et sur des sous-bandes de fréquence utilisables pour une émission de données au terminal (120) sur la liaison aller.

29. Terminal (120) selon la revendication 25, dans lequel le processeur (1090, 1092) est fonctionnel pour générer le pilote à la demande en utilisant un multiplexage par répartition dans le temps, TDM, un multiplexage par répartition en fréquence, FDM, un multiplexage par répartition de code, CDM, ou une combinaison de ceux-ci.

**30.** Terminal (120) selon la revendication 25, dans lequel le processeur (1090, 1092) est fonctionnel pour générer le pilote à la demande pour une émission à partir de multiples antennes en utilisant un multiplexage par répartition dans le temps, TDM, un multiplexage par répartition en fréquence, FDM, un multiplexage par répartition de code, CDM, ou une combinaison de ceux-ci.

**31.** Terminal (120) selon la revendication 25, dans lequel le processeur (1080) est fonctionnel pour déterminer si un paquet émis au terminal (120) est décodé correctement et pour recevoir implicitement la requête d'émission de pilote à la demande sur la liaison de réserve si le paquet n'a pas été décodé correctement.

**32.** Procédé d'émission d'un pilote à la demande dans un système de communication (100), comprenant :

la réception au niveau d'un terminal (120) d'une requête d'une émission de pilote à la demande sur une liaison de retour ;
la détermination d'une allocation de temps-fréquence pour l'émission de pilote à la demande ; et
l'émission d'un pilote à la demande sur la liaison de retour sur l'allocation de temps-fréquence, dans lequel la émission de pilote à la demande sur la liaison de retour est utilisée pour programmer le terminal (120) pour une émission de données sur une liaison aller, pour un traitement spatial d'émission de données au terminal (120), ou à la fois pour une programmation et un traitement spatial.

**33.** Procédé selon la revendication 32, comprenant en outre :

l'émission d'une signalisation sur un segment de fréquence attribué au terminal (120), et dans lequel la requête est une requête d'émission de pilote à la demande sur au moins un segment de fréquence additionnel non attribué au terminal (120).

**34.** Procédé selon la revendication 32, dans lequel l'émission du pilote à la demande sur la liaison de retour comprend l'émission d'un pilote à la demande à large bande sur la liaison de retour.

**35.** Procédé selon la revendication 32, dans lequel la émission du pilote à la demande sur la liaison de retour comprend l'émission d'un pilote à la demande à bande étroite sur la liaison de retour et sur des sous-bandes de fréquence utilisables pour une émission de données au terminal (120) sur la liaison aller.

**36.** Programme informatique comprenant des instructions pour mettre en oeuvre les procédés de l'une des revendications 32 à 35.

FIG. 1

EP 1 884 093 B1

```
                    Start

                                    ╔210
      Select a set of terminals for
      on-demand pilot transmission
           on the reverse link

                                    ╔212
      Assign each selected terminal
       with a time-frequency allocation
      for on-demand pilot transmission
           on the reverse link

                                    ╔214
      Send the assigned time-frequency
      allocations to the selected terminals

                                    ╔216
      Receive and process on-demand
      pilot transmissions on the reverse
        link from all selected terminals

                                    ╔218
      Derive an RL channel estimate
      for each selected terminal based
      on the received pilot and derive
       an FL channel estimate based
        on the RL channel estimate

                                    ╔220
          Schedule terminals for
       FL data transmission based
        on the FL channel estimates
          for all selected terminals

                                    ╔222
          Transmit data to the
       scheduled terminals based on
         their FL channel estimates

                     End
```

200

**FIG. 2**

Forward Link (FL) Slot | Reverse Link (RL) Slot

300

• • •  | n-2 | n-1 | n | n+1 | n+2 | • • •

Time

TDD Frame

**FIG. 3**

FIG. 4

FIG. 5

*FIG. 6*

*FIG. 7*

**FIG. 8**

EP 1 884 093 B1

*FIG. 9*

**Single-Antenna Terminal**

**Multi-Antenna Terminal**

**Base Station**

**FIG. 10**

**EP 1 884 093 B1**

## REFERENCES CITED IN THE DESCRIPTION

### Patent documents cited in the description

- US 2003108117 A1
- US 2001055297 A1